(19) Europäisches Patentamt
European Patent Office
Office européen des brevets

(11) EP 4 177 285 A1

(12) DEMANDE DE BREVET EUROPEEN

(43) Date de publication:
**10.05.2023 Bulletin 2023/19**

(21) Numéro de dépôt: **22204631.0**

(22) Date de dépôt: **31.10.2022**

(51) Classification Internationale des Brevets (IPC):
***C08G 18/12*** (2006.01) ***C08G 18/20*** (2006.01)
***C08G 18/22*** (2006.01) ***C08G 18/28*** (2006.01)
***C08G 18/34*** (2006.01) ***C08G 18/48*** (2006.01)
***C08G 18/66*** (2006.01) ***C08G 18/75*** (2006.01)
***C08G 18/83*** (2006.01) ***C08L 75/08*** (2006.01)
***C09J 5/00*** (2006.01) ***C09J 175/08*** (2006.01)
***C09K 3/10*** (2006.01)

(52) Classification Coopérative des Brevets (CPC):
(C-Sets disponibles)
**C08G 18/837; C08G 18/12; C08G 18/2027; C08G 18/2063; C08G 18/227; C08G 18/289; C08G 18/348; C08G 18/4808; C08G 18/4841; C08G 18/4845; C08G 18/4854; C08G 18/6692; C08G 18/755; C08L 75/08; C09J 5/00;** (Cont.)

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **04.11.2021 FR 2111744**

(71) Demandeur: **Bostik SA**
**92700 Colombes (FR)**

(72) Inventeurs:
- **GUILLOTTE, Régis**
  **60280 VENETTE (FR)**
- **COLIN, Boris**
  **60280 VENETTE (FR)**

(74) Mandataire: **Arkema Patent**
**Arkema France**
**DRD-DPI**
**420, rue d'Estienne d'Orves**
**92705 Colombes Cedex (FR)**

# (54) PROCEDE DE PREPARATION DE COPOLYURETHANES IONIQUES SILYLES A ELASTICITE AMELIOREE

(57) 1) Procédé de préparation de copolyuréthanes silylés ioniques comprenant 2 groupes terminaux uréido-alkylène-alkoxysilane comprenant :
(i) la formation de copolyuréthanes à terminaisons -NCO par réaction de polyaddition entre un polyisocyanate, un diol carboxylique et une composition de polyols comprenant un polyol de Mn supérieure ou égale à 2500 g/mole et un polyol de Mn inférieure à 2500 g/mole ;
(ii) la neutralisation du produit formé avec une amine tertiaire,
(iii) une réaction avec un aminosilane dérivé d'une amine secondaire

2) Composition de copolyuréthanes silylés ioniques comprenant 2 groupes terminaux uréido-alkylène-alkoxysilane, susceptible d'être obtenue par le procédé
3) Composition réticulable d'adhésif et/ou mastic comprenant la composition 2) et une charge.

EP 4 177 285 A1

(52) Classification Coopérative des Brevets (CPC):
(Cont.)
**C09J 175/08; C09K 3/1021;** C08G 2190/00

C-Sets
**C08G 18/12, C08G 18/289**

## Description

DOMAINE DE L'INVENTION

La présente invention concerne un procédé de préparation d'une composition de copolyuréthanes ioniques silylés présentant des propriétés élastiques améliorées, en particulier un allongement à la rupture plus élevé. La présente invention a également pour objet la composition de copolyuréthanes ioniques silylés susceptible d'être obtenue par ledit procédé. L'invention concerne enfin une composition réticulable d'adhésif et/ou mastic, comprenant ladite composition de copolyuréthanes, et un procédé d'assemblage de 2 substrats la mettant en œuvre.

ARRIERE PLAN TECHNIQUE

Les polyuréthanes silylés sont compris, en combinaison avec une charge minérale, dans les compositions de mastics qui sont parmi les plus appréciées du marché. Ces dernières présentent en effet l'avantage d'être exemptes d'isocyanates, en particulier de diisocyanates monomères. Ces compositions constituent donc une alternative, préférée d'un point de vue toxicologique, aux compositions à base de polyuréthane à terminaisons isocyanates.

On qualifie souvent lesdits polyuréthanes silylés de « prépolyuréthanes » car ils sont dotés de groupes réactifs alkoxysilane, généralement terminaux, qui réagissent avec l'eau provenant de l'humidité de l'air ou des substrats à assembler, au moment de la mise en œuvre du mastic.

Cette réaction, dénommée réaction de réticulation, se déroule donc, en présence d'humidité, par hydrolyse des groupements alkoxysilanes portés par le prépolymère, puis leur condensation pour former une liaison siloxane (-Si-O-Si-) qui unit les chaînes de prépolymère en un réseau polymérique tridimensionnel.

L'achèvement de cette réaction de réticulation, après une durée appelée « temps de réticulation », a donc pour effet la création d'un réseau tridimensionnel compris dans le joint adhésif qui unit les substrats à assembler et qui présente les propriétés mécaniques souhaitées.

Parmi ces propriétés, le joint adhésif ainsi formé doit présenter une grande solidité, marquée par une résistance élevée à la déformation. Il doit également présenter une flexibilité (ou élasticité) qui lui permet de s'adapter aux mouvements relatifs des substrats qu'il réunit, par exemple sous l'effet des variations dimensionnelles induites par les changements de température ou encore sous l'effet des sollicitations mécaniques auxquelles l'assemblage peut être soumis durant sa durée de vie.

La résistance à la déformation d'un mastic est souvent quantifiée, dans la pratique, par la contrainte à la rupture (exprimée en Pa). Cette dernière est simplement définie, dans un essai de traction d'une éprouvette constituée dudit mastic, comme étant la contrainte qu'il faut appliquer à ladite éprouvette pour en obtenir la rupture.

L'élasticité d'un mastic est, quant à elle, généralement représentée par une mesure de l'élongation à la rupture (exprimée en %), et qui est définie, dans l'essai de traction susmentionné, comme l'allongement mesuré pour ladite éprouvette au moment de sa rupture.

Les polyuréthanes silylés les plus connus sont généralement préparés par un procédé en 2 étapes.

La 1ère étape consiste à former un polyuréthane à terminaisons isocyanates, en mettant en œuvre une réaction de polyaddition d'un polyéther diol (notamment un poly(propylèneglycol)) avec un polyisocyanate (de préférence un diisocyanate).

La seconde étape consiste à faire réagir le prépolyuréthane ainsi obtenu avec un aminosilane comprenant au moins un groupe alkoxysilane, de manière à obtenir une chaîne principale polyuréthane qui comprend 2 groupes terminaux alkoxysilane reliés, chacun, à ladite chaîne par l'intermédiaire d'une fonction urée.

Les polyuréthanes silylés obtenus par ce procédé en 2 étapes seront désignés ci-après par l'appellation de "SPUR".

Toutefois, le temps de réticulation de ces polyuréthanes silylés, notamment de ces SPUR, doit être accéléré pour répondre aux besoins des utilisateurs, et l'on incorpore obligatoirement à cet effet, dans les compositions de mastic les comprenant, un catalyseur de réticulation.

Généralement, le catalyseur de réticulation inclus dans les compositions de mastics ou d'adhésifs à base de polymères silylés, notamment de SPUR, est un catalyseur métallique, et plus particulièrement un catalyseur à base d'étain, tel que le dilaurate de dibutylétain (ou DBTDL), le diacétate de dibutylétain ou le bis(acétylacétonate) de dibutylétain ou de dioctylétain. Cependant ces catalyseurs font l'objet de critiques relatives à leur toxicité ou à leur impact sur l'environnement, ce qui conduit les industriels concernés à limiter, ou même éviter leur utilisation, d'autant plus que ces catalyseurs métalliques restent dans le joint adhésif, une fois la composition réticulée.

Des catalyseurs de réticulation organiques dérivés d'hétérocycles azotés comme le 1,8-diazabicyclo(5.4.0)undec-7-ene (appelé également DBU) ou encore le 1,5,7-triazabicyclo[4.4.0]dec-5-ene (appelé également TBD) ont été utilisés comme alternative aux catalyseurs métalliques, notamment aux catalyseurs à base d'étain. Toutefois, ils présentent l'inconvénient de provoquer un changement de couleur du joint adhésif, généralement vers le jaune, attribué à

leur migration à la surface dudit joint.

On connaît par la demande WO 2021/079063 un copolyuréthane silylé ionique comprenant 2 groupes terminaux uréido-alkylène-alkoxysilane.

Un tel copolyuréthane est préparé par un procédé dérivé du procédé de fabrication des SPUR rappelé précédemment, dans lequel la 1ère étape est modifiée pour former un copolyuréthane à terminaisons isocyanates, en faisant réagir avec le diisocyanate outre le poly(propylèneglycol) un diol carboxylique. Les groupements carboxyliques pendants du copolyuréthane ainsi obtenu sont ensuite neutralisés avec une amine, avant mise en œuvre de l'aminosilane comme indiqué dans la seconde étape du procédé de fabrication des SPUR

Le copolyuréthane enseigné par cette demande PCT conduit avantageusement à des compositions réticulables de mastic et/ou d'adhésif qui présentent, en l'absence de catalyseur, notamment en l'absence de catalyseur à base d'étain, un temps de réticulation réduit par rapport aux SPUR de l'art antérieur. En outre, le joint adhésif qui est formé par la réticulation en présence d'humidité d'une composition réticulable adhésive et/ou de mastic comprenant ledit copolyuréthane et au moins une charge minérale, présente également de meilleures propriétés mécaniques, et notamment une résistance à la déformation et une élasticité améliorées, marquées respectivement par une contrainte et une élongation à la rupture augmentées.

Toutefois, cette élongation à la rupture ne dépasse pas généralement 100 %, ce qui peut s'avérer insuffisant au regard des performances attendues des mastics dans le domaine de la construction ou dans certains domaines industriels comme la fixation par collage des parebrises pour les voitures, dans l'industrie automobile.

En effet, dans la technologie moderne de la construction des bâtiments par exemple, les mastics sont largement utilisés pour joindre (ou assembler ou coller) les substrats les plus divers, par exemple des substrats en acier ou en béton ou d'autres matériaux poreux à la surface irrégulière, perméable et fragile. Ces mastics doivent offrir des propriétés d'élasticité adéquates, afin de suivre avec souplesse les mouvements du joint adhésif causés par les mouvements relatifs des substrats entre lesquels ils ont été appliqués, sous l'effet des divers facteurs externes, tels que la température extérieure ou les mouvements du sol.

Ainsi, la présente invention a pour but de mettre à disposition des copolyuréthanes silylés ioniques dont la réticulation en combinaison avec une charge minérale dans une composition de mastic a pour effet la formation d'un joint adhésif qui présente un meilleur allongement à la rupture, en particulier un allongement à la rupture supérieur ou égal à 100%, tout en maintenant ses autres caractéristiques à des niveaux acceptables.

Un autre but de l'invention est de remédier aux inconvénients des polyuréthanes silylés connus de l'art antérieur, notamment aux inconvénients des SPUR

Un autre but de l'invention est de proposer des polyuréthanes silylés dont la réticulation ne nécessite pas, ou substantiellement pas, de catalyseur à base d'étain, ou de catalyseur organique dérivé d'hétérocycle azoté.

Un autre but de l'invention est de proposer un polyuréthane silylé qui puisse réticuler en l'absence de catalyseur.

Un autre but de l'invention est de proposer une composition de mastic à base de polyuréthanes silylés qui permette, sans ajout ou sans ajout substantiel de catalyseur, d'obtenir un temps de réticulation réduit.

Un autre but de l'invention est de proposer une composition de mastic à base de polyuréthanes silylés, conduisant à un joint adhésif qui présente des propriétés de contrainte à la rupture améliorées, en particulier une contrainte à la rupture d'au moins 3 MPa.

Il a été trouvé que ces buts peuvent être atteints en totalité ou en partie, au moyen de la composition de copolyuréthanes silylés à groupes terminaux alkoxysilanes, dont le procédé de préparation est tel que décrit ci-après.

## DESCRIPTION DE L'INVENTION

### **Procédé de préparation** :

La présente invention a pour objet, en premier lieu, un procédé de préparation d'une composition de copolyuréthanes silylés ioniques comprenant 2 groupes terminaux uréido-alkylène-alkoxysilane, ledit procédé comprenant successivement :

- une étape (i) de formation d'une composition de copolyuréthanes à terminaisons - NCO par mise en œuvre d'une réaction de polyaddition entre :

  - un polyisocyanate (A) de formule (iA) :

$$OCN\text{-}R^1\text{-}NCO \qquad (iA)$$

  dans laquelle $R^1$ représente un radical divalent hydrocarboné comprenant de 5 à 45 atomes de carbone qui peut être aromatique ou aliphatique, linéaire, ramifié ou cyclique et peut inclure au moins un hétéroatome choisi

parmi O, S et N;

- une composition (B) de polyols comprenant :

  - au moins un polyol (B1) de masse moléculaire moyenne en nombre Mn supérieure ou égale à 2500 g/mole ; et
  - au moins un polyol (B2) de masse moléculaire moyenne en nombre Mn inférieure à 2500 g/mole ; et

- un diol carboxylique (C) de formule (iC) :

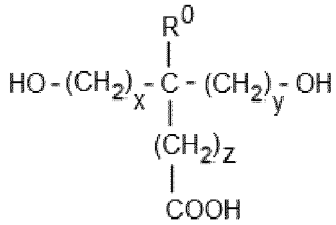

(iC)

dans laquelle :

  - $R^0$ représente un atome d'hydrogène ou un radical alkyle comprenant de 1 à 18 atomes de carbone ;
  - x et y, identiques ou différents, sont des nombres entiers allant de 1 à 8 ; et
  - z est un nombre entier allant de 0 à 8 ; puis

- une étape (ii) de réaction de la composition de copolyuréthanes formée à l'étape (i) avec une amine (D) de formule (iiD) :

N(R)(R')(R") (iiD)

dans laquelle :

  - R, R' et R", identiques ou différents, représentent chacun un radical hydrocarboné saturé, insaturé ou aromatique, comprenant éventuellement un hétéroatome choisi parmi N, O et S ;
  - R, R' et R" étant en outre tels que ladite amine tertiaire (D) est une amine ou polyamine linéaire, ramifiée ou cyclique dont la masse molaire moyenne en nombre Mn va de 59 à 6000 g/mol et qui présente un pKa supérieur à 8 ; puis

- une étape (iii) de réaction de la composition de copolyuréthanes à groupe terminaux -NCO formée à l'étape (ii) avec un aminosilane (E) dérivé d'une amine secondaire, de formule (iiiE) :

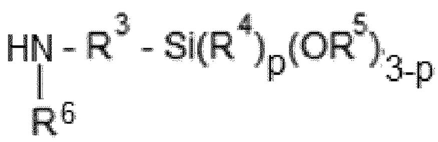

(iiiE)

dans laquelle :

  - $R^3$ représente un radical divalent alkylène linéaire ou ramifié comprenant de 1 à 6 atomes de carbone ;
  - $R^4$ représente un radical alkyl linéaire ou ramifié comprenant de 1 à 4 atomes de carbone ;
  - $R^5$ représente un radical alkyl linéaire ou ramifié comprenant de 1 à 4 atomes de carbone, un radical alkylcarbonyl comprenant de 2 à 8 atomes de carbone, ou un radical dialkylimino comprenant de 3 à 8 atomes de carbone ; et
  - p est un nombre entier égal à 0, 1 ou 2 ;
  - $R^6$ représente un radical phényle, un radical alkyle linéaire, ramifié ou cyclique comprenant de 1 à 6 atomes

de carbone, ou un radical choisi parmi les radicaux :

- de formule (IIc) :

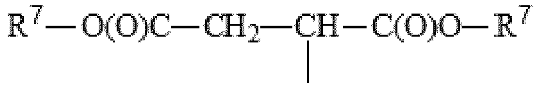

(IIc)

- de formule (IId) :

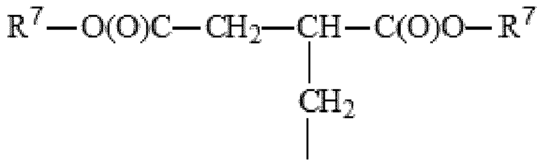

(IId) ;

- de formule (IIe) :

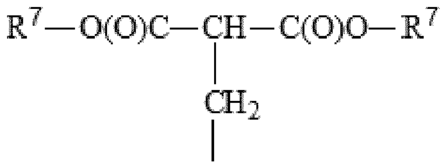

(IIe)

dans lesquelles $R^7$ est un radical alkyle linéaire ou ramifié comprenant de 1 à 6 atomes de carbone ;

- de formule (IIf) :

$-CH_2-COO^-, HN^+(R)(R')(R'')$ (IIf)

; et

- de formule (IIg) :

$-CH_2-CH_2-COO^-, HN^+(R)(R')(R'')$ (IIg)

dans lesquelles R, R' et R" sont les radicaux tels que définis précédemment.

Il a à présent été trouvé que la mise en œuvre du procédé selon l'invention conduit à la formation d'un nouveau copolyuréthane ionique silylé, se présentant sous la forme d'une composition, dont la combinaison avec une charge minérale résulte en une composition réticulable de mastic et/ou d'adhésif qui présente, en l'absence de catalyseur, un temps de réticulation avantageusement comparable à celui du copolyuréthane ionique silylé enseigné par le WO 2021/079063. De plus, le joint adhésif résultant de la réticulation de ladite composition présente une résistance à la déformation quantifiée par une contrainte à la rupture en traction d'au moins 3 MPa, correspondant à la solidité attendue d'un joint adhésif pour le bâtiment ou dans les domaines industriels d'intérêt. Enfin, ledit joint adhésif possède une élongation à la rupture supérieure ou égal à 100%, et même supérieure à 150%, allant jusqu'à des valeurs voisines ou supérieures à 200 %, donc très largement supérieures à celles du copolyuréthane ionique silylé enseigné par le WO 2021/079063.

Dans le présent texte, la masse moléculaire moyenne Mn est mesurée par chromatographie d'exclusion stérique (ou SEC, acronyme de « Size Exclusion Chromatography » en anglais) qui est également désignée par les termes de chromatographie par perméation de gel (ou par le sigle anglais correspondant GPC). L'étalonnage mis en œuvre est usuellement un étalonnage PEG (PolyEthylèneGlycol) ou PS (PolyStyrène), de préférence PS.

**<u>Etape (i)</u>** :

<u>Polyisocyanate (A)</u> :

L'étape (i) met en œuvre le polyisocyanate (A) de formule (iA) :

$$OCN\text{-}R^1\text{-}NCO \qquad (iA)$$

dans laquelle $R^1$ représente un radical divalent hydrocarboné comprenant de 5 à 45 atomes de carbone qui peut être aromatique ou aliphatique, linéaire, ramifié ou cyclique et peut inclure au moins un hétéroatome choisi parmi O, S et N.

De préférence, le polyisocyanate (A) de formule (iA) est tel que le radical $R^1$ est choisi parmi l'un des radicaux divalents suivants dont les formules ci-dessous font apparaître les 2 valences libres :

- a) le radical divalent dérivé de l'isophorone diisocyanate (IPDI) :

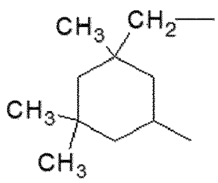

- b) le radical divalent dérivé des 4,4'- et 2,4'-dicyclohexylméthane diisocyanate (HMDI) :

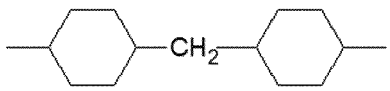

ou

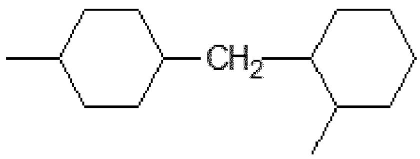

- c) le radical dérivé des 2,4- et 2,6-toluène diisocyanate (TDI)

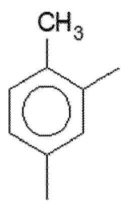

ou

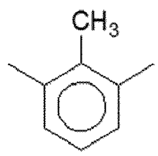

- d) le radical dérivé des 4,4'- et 2,4'-diphénylméthane diisocyanate (MDI)

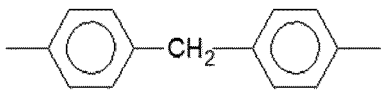

ou

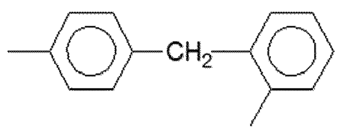

- e) le radical dérivé du m-xylylène diisocyanate (m-XDI)

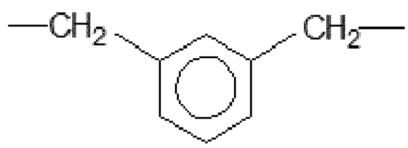

- f) le radical dérivé de l'hexamethylène diisocyanate (HDI)

  -(CH2)6-

- g) le groupe divalent dérivé d'un allophanate d'hexaméthylène diisocyanate (HDI) de formule (iA') :

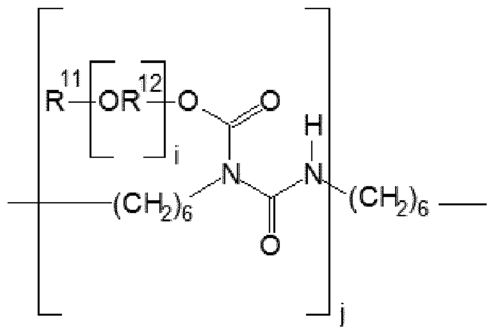

(iA')

dans laquelle :

- i est un nombre entier allant de 2 à 5 ;
- j est un nombre entier allant de 1 à 2 ;
- $R^{11}$ représente un radical hydrocarboné, saturé ou insaturé, cyclique ou acyclique, linéaire ou ramifié, comprenant de 6 à 14 atomes de carbone ;
- $R^{12}$ représente un groupe divalent propylène ;
- i, j, $R^{11}$ et $R^{12}$ étant tels que l'allophanate d'hexaméthylène diisocyanate correspondant à la formule (iA') comprend une teneur en groupe isocyanate NCO allant de 12 à 14% en poids par rapport au poids dudit allophanate.

Les polyisocyanates dont le radical $R^1$ correspond aux radicaux a) à f) ci-dessus sont bien connus de l'homme du métier et largement disponibles au plan commercial. Un polyisocyanate dont le radical $R^1$ correspond au groupe divalent g) ci-dessus est également commercialisé sous le nom de "Tolonate®", par la société Vencorex, par exemple sous la dénomination de "Tolonate® X FLO 100".

Selon une variante particulièrement préférée du procédé selon l'invention, le polyisocyanate (A) est l'isophorone diisocyanate (IPDI).

Composition (B) de polyols :

L'étape (i) met en œuvre une composition (B) de polyols comprenant :

- au moins un polyol (B1) de masse moléculaire moyenne en nombre Mn supérieure ou égale à 2500 g/mole, et
- au moins un polyol (B2) de masse moléculaire moyenne en nombre Mn inférieure à 2500 g/mole.

Selon un mode de réalisation, la composition (B) de polyols est constituée dudit au moins polyol (B1) et dudit au moins polyol (B2).

Selon une variante préférée, la masse moléculaire moyenne en nombre Mn du polyol (B1) est comprise dans un domaine allant de 2500 g/mole à 20000 g/mole, plus préférentiellement allant de 3000 g/mole à 15000 g/mole, notamment de 3200 g/mole à 9000 g/mole, encore plus préférentiellement allant de 3000 g/mole à 5000 g/mole, en particulier de 3200 g/mole à 5000 g/mole.

Selon une autre variante préférée, la masse moléculaire moyenne en nombre Mn du polyol (B2) est supérieure ou égale à 200 g/mole et inférieure à 2500 g/mole, et de manière encore plus préférée est comprise dans un domaine

allant de 200 g/mole à 2250 g/mole.

La composition (B) de polyols comprend avantageusement (ou est constituée de) :

- 10 % à 90 % en mole du polyol (B1), et
- 10 % à 90 % en mole du polyol (B2),
  lesdits pourcentages en mole étant exprimés sur la base du nombre total de moles de (B1) et (B2) présentes dans la composition (B).

Lorsque la composition (B) de polyols comprend (ou est constituée par) plusieurs polyols (B1) et/ou plusieurs polyols (B2), il est entendu que les domaines de pourcentage molaire indiqués précédemment s'appliquent, respectivement, au nombre total de mole des polyols (B1) et/ou au nombre total de mole des polyols (B2).

De préférence, la composition (B) de polyols comprend avantageusement (ou est constituée de) :

- 10 % à 70 % en mole du polyol (B1), et
- 30 % à 90 % en mole du polyol (B2),
  lesdits pourcentages en mole étant exprimés sur la base du nombre total de moles de (B1) et (B2) présentes dans la composition (B).

Selon une variante encore plus préférée, la composition (B) de polyols est constituée de 10 à 35 % en mole du (ou des) polyol (B1) et de de 65 % à 90 % en mole du (ou des) polyol (B2), et encore plus préférentiellement de 15 à 30 % en mole de (B1) et de 70 à 85 % en mole de (B2). Il a été trouvé que la composition de copolyuréthanes ioniques silylés formée par le procédé selon l'invention correspondant à une telle composition (B) conduit, après mise en œuvre dans une composition de mastic et/ou d'adhésif, à un joint adhésif dont l'élongation à la rupture est très avantageusement supérieure à 200 %.

Selon un mode de réalisation tout particulièrement préféré, la composition (B) de polyols comprend (ou est constituée de) outre le polyol (B1) tel que défini précédemment, deux polyols (B2) qui sont choisis, respectivement, parmi :

- un premier polyol (B2-1) de masse moléculaire moyenne en nombre Mn supérieure ou égale à 1250 g/mole et inférieure à 2500 g/mole, de préférence comprise entre 1250 g/mole et 2250 g/mole, et
- un second polyol (B2-2) de masse moléculaire moyenne en nombre Mn allant de 200 g/mole à 1000 g/mole, et encore plus préférentiellement allant de 500 g/mole à 1000 g/mole.

Conformément à ce dernier mode de réalisation, la composition (B) de polyols comprend alors (ou est constituée), de manière préférée :

- de 15 % à 45% en mole du polyol (B1),
- de 10 % à 25 % en mole du polyol (B2-1), et
- de 30 % à 70 % en mole du polyol (B2-2),
  lesdits pourcentages en mole étant exprimés sur la base du nombre total de moles de (B1) et (B2) présentes dans la composition (B).

Les polyols compris dans la composition (B), et en particulier les polyols (B1) et (B2), peuvent avoir une fonctionnalité hydroxyle allant de 2 à 6, de préférence 2 à 4, et encore plus préférentiellement de 2 à 3. Dans le cadre de l'invention, et sauf mention contraire, la fonctionnalité hydroxyle d'un polyol est le nombre moyen de fonctions hydroxyle par mole de polyol.

Selon une variante préférée, lesdits polyols ont une fonctionnalité hydroxyle égale à 2.

Les polyols utilisables dans la composition (B), et en particulier les polyols (B1) et (B2), peuvent être choisis parmi les polyester polyols, les polyéther polyols, les polydiène polyols, les polycarbonate polyols, les poly(éther-carbonate) polyols. Les polyols utilisables peuvent également être choisis parmi les polyols aliphatiques, les polyols arylaliphatiques, les polyols aromatiques.

Parmi les polyester polyols, on peut par exemple citer :

- les polyesters polyols d'origine naturelle telle que l'huile de ricin ;
- les polyesters polyols résultant de la condensation :
  - d'un ou plusieurs polyols aliphatiques (linéaires, ramifiés ou cycliques) ou aromatiques tels que par exemple l'éthanediol, le 1,2-propanediol, le 1,3-propanediol, le glycérol, le triméthylolpropane, le 1,6-hexanediol, le 1,2,6-hexanetriol, le butènediol, le cyclohexanediméthanol, le sucrose, le glucose, le sorbitol, le glycérol, le triméthylolpropane, le pentaérythritol, le mannitol, la triéthanolamine, la N-méthyldiéthanolamine, et leurs mélanges, avec

- un ou plusieurs acide polycarboxylique ou son dérivé ester ou anhydride tel que l'acide 1,6-hexanedioïque, l'acide dodécanedioïque, l'acide azélaïque, l'acide sébacique, l'acide adipique, l'acide 1,18-octadécanedioïque, l'acide phtalique, l'acide succinique et les mélanges de ces acides, un anhydride insaturé tel que par exemple l'anhydride maléique ou phtalique, ou une lactone telle que par exemple la caprolactone.

Les polyester polyols suscités peuvent être préparés de manière conventionnelle, et sont pour la plupart disponibles commercialement.

Parmi les polyesters polyols, on peut par exemple citer les produits suivants de fonctionnalité hydroxyle égale à 2 :

- le TONE® 0240 (commercialisé par UNION CARBIDE) qui est une polycaprolactone de masse moléculaire moyenne en nombre Mn d'environ 2000 g/mol, et un point de fusion de 50°C environ,
- le DYNACOLL® 7381 (commercialisé par EVONIK) de masse moléculaire moyenne en nombre Mn d'environ 3500 g/mol, et ayant un point de fusion de 65°C environ,
- le DYNACOLL® 7360 (commercialisé par EVONIK) qui résulte de la condensation de l'acide adipique avec l'hexane diol, et a une masse moléculaire moyenne en nombre Mn d'environ 3500 g/mol, et un point de fusion de 55°C environ,
- le DYNACOLL® 7330 (commercialisé par EVONIK) de masse moléculaire moyenne en nombre Mn d'environ 3500 g/mol, et ayant un point de fusion de 85°C environ,
- le DYNACOLL® 7363 (commercialisé par EVONIK) qui résulte également de la condensation de l'acide adipique avec l'hexane diol, et a une masse moléculaire moyenne en nombre Mn d'environ 5500 g/mol, et un point de fusion de 57°C environ,
- le DYNACOLL ® 7250 (commercialisé par EVONIK) : polyester polyol ayant une viscosité de 180 Pa.s à 23°C, une masse moléculaire moyenne en nombre Mn égale à 5 500 g/mol, et une Tg égale à -50°C,
- le KURARAY ® P-6010 (commercialisé par KURARAY) : polyester polyol ayant une viscosité de 68 Pa.s à 23°C, une masse moléculaire moyenne en nombre égale à 6 000 g/mol, et une Tg égale à -64°C,
- le KURARAY ® P-10010 (commercialisé par KURARAY) : polyester polyol ayant une viscosité de 687 Pa.s à 23°C, et une masse moléculaire moyenne en nombre égale à 10 000 g/mol ; et
- le REALKY XTR 10140 (commercialisé par CRAY VALLEY) de masse moléculaire moyenne en nombre voisine de 1000 g/mole.

Les polyéther polyols utilisables dans la composition (B), et en particulier les polyols (B1) et (B2), sont de préférence choisis parmi les polyoxyalkylène-polyols, dont la partie alkylène, linéaire ou ramifiée, comprend de 1 à 4 atomes de carbone, de préférence de 2 à 3 atomes de carbone.

Plus préférentiellement, les polyéther polyols utilisables selon l'invention sont choisis parmi les polyoxyalkylène diols ou polyoxyalkylène triols, et mieux encore des polyoxyalkylène diols, dont la partie alkylène, linéaire ou ramifiée, comprend de 1 à 4 atomes de carbone, de préférence de 2 à 3 atomes de carbone.

A titre d'exemple de polyoxyalkylène diols ou triols utilisables selon l'invention, on peut par exemple citer :

- les polyoxypropylène diols ou triols (aussi désignés par polypropylène glycols (PPG) diol ou triol),
- les polyoxyéthylène diol ou triol (aussi désignés par polyéthylène glycols (PEG) diol ou triol),
- les polyoxybutylène glycols (aussi désignés par polybutylène glycols (PBG) diol ou triol),
- les copolymères ou terpolymères de PPG/PEG/PBG diol ou triol,
- les polytétrahydrofurane (PolyTHF) diol ou triol,
- les polytétraméthylène glycols (PTMG) ayant une masse moléculaire moyenne en nombre allant de 200 g/mol à 12 000 g/mol.

De préférence, les polyéther polyols compris dans la composition (B) sont choisis parmi les polyoxypropylène diols. Les polyéther polyols mentionnés ci-dessus peuvent être préparés de manière conventionnelle, et sont largement disponibles dans le commerce. Ils peuvent par exemple être obtenus par polymérisation de l'oxyde d'alkylène correspondant en présence d'un catalyseur à base d'un double complexe métal-cyanure.

A titre d'exemples de polyéther diols, on peut citer les polyoxypropylène diols commercialisés sous la dénomination « ACCLAIM® » par la société COVESTRO, tels que :

- l' ACCLAIM® 18200 de masse moléculaire moyenne en nombre voisine de 18 700 g/mol,
- l' ACCLAIM® 12200 de masse moléculaire moyenne en nombre voisine de 11 335 g/mol,
- l'ACCLAIM® 8200 de masse moléculaire moyenne en nombre voisine de 8 057 g/mol, et

- l'ACCLAIM® 4200 de masse moléculaire moyenne en nombre voisine de 4 020 g/mol, ou encore
- le polyoxypropylène diol commercialisé sous la dénomination VORANOL® P2000 par la société DOW de masse moléculaire moyenne en nombre voisine de 2 004 g/mol, et
- le VORANOL® EP 1900 qui est un PPG difonctionnel de masse moléculaire moyenne en nombre d'environ 4 008 g/mol.

A titre d'exemples de polyéther triols, on peut citer :

- le polyoxypropylène triol commercialisé sous la dénomination « VORANOL® CP3355 » par la société DOW, de masse moléculaire moyenne en nombre voisine de 3 554 g/mol,
- le VORANOL® CP 755 qui est un PPG trifonctionnel de masse moléculaire moyenne en nombre d'environ 710 g/mole ; ou encore
- l'ACCLAIM® 6300 qui est un PPG trifonctionnel de masse moléculaire moyenne en nombre voisine de 5948 g/mole.

A titre d'exemples de polytétraméthylène glycols (PTMG) ayant une fonctionnalité hydroxyle égale à 2, on peut citer :

- le TERATHANE® 1000 dont le Mn est voisine de 1000 g/mole,
- le TERATHANE® 650 dont le Mn est voisine de 650 g/mole, et
- le TERATHANE® 250 dont le Mn est voisine de 250 g/mole

Les polydiène polyols utilisables dans la composition (B), et en particulier les polyols (B1) et (B2), sont choisis parmi les polybutadiènes comportant des groupes hydroxyles terminaux, éventuellement hydrogénés ou époxydés. Préférentiellement, lesdits sont choisis parmi les homopolymères et copolymères de butadiène comportant des groupes hydroxyles terminaux, éventuellement hydrogénés ou époxydés.

Les dérivés hydrogénés mentionnés ci-dessus peuvent être obtenus par hydrogénation totale ou partielle des doubles liaisons d'un polydiène comportant des groupes hydroxyles terminaux, et sont donc saturé(s) ou insaturé(s).

Les dérivés époxydés mentionnés ci-dessus peuvent être obtenus par époxydation chémio sélective des doubles liaisons de la chaîne principale d'un polydiène comportant des groupes hydroxyles terminaux, et comportent donc au moins un groupe époxy dans sa chaîne principale.

A titre d'exemples de polybutadiène polyols, on peut citer les homopolymères de butadiène, saturé ou insaturé, comprenant des groupes hydroxyles terminaux, éventuellement époxydés, tels que par exemple ceux commercialisés sous la dénomination POLY BD® ou KRASOL® par la société CRAY VALLEY.

A titre d'exemple de polycarbonate diol, on peut citer :

- le CONVERGE POLYOL 212-10 et CONVERGE POLYOL 212-20 commercialisés par la société NOVOMER respectivement de masse moléculaire en nombre (Mn) égales à 1000 et 2000 g/mol,
- le DESMOPHEN® C XP 2716 commercialisé par COVESTRO de masse moléculaire en nombre (Mn) égale à 326 g/mol,
- les POLYOL C-590, C1090, C-2090 et C-3090 commercialisés par KURARAY ayant une masse moléculaire en nombre (Mn) allant de 500 à 3000 g/mol.

Les polyols utilisables dans la composition (B), et en particulier les polyols (B1) et (B2), peuvent encore être choisis parmi des diols biosourcés comme :

- le KRASOL® F3000 qui est un polyfarnesene diol de Mn égal à 3000 g/mole, commercialisé par Cray Valley,
- le PRIPOL® 2033 de Mn égal à 970 g/mole, commercialisé par CRODA.

Selon une variante préférée du procédé selon l'invention, les polyols compris dans la composition (B), et en particulier les polyols (B1) et (B2), sont des polyéther diols.

<u>Diol carboxylique (C)</u> :

L'étape (i) met en œuvre le diol carboxylique (C) de formule (iC) :

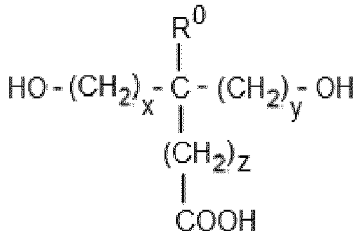

(iC)

dans laquelle :

- $R^0$ représente un atome d'hydrogène ou un radical alkyle comprenant de 1 à 18 atomes de carbone ;
- x et y, identiques ou différents, sont des nombres entiers allant de 1 à 8 ; et
- z est un nombre entier allant de 0 à 8.

Selon une variante avantageuse du procédé selon l'invention, l'étape (i) met en œuvre un diol carboxylique (C) de formule (iC) dans laquelle :

- $R^0$ représente un radical alkyle comprenant de 1 à 4 atomes de carbone, de préférence un radical méthyle, éthyle ou n-propyle, encore plus préférentiellement un radical méthyle ;
- x et y sont identiques et égaux à 1 ; et/ou
- z est égal à 0.

Comme exemples spécifiques de diols carboxyliques (C), on peut citer les acides $\alpha,\alpha$-diméthylolalcanoïques suivants :

- l'acide 2,2-di(hydroxyméthyl)propionique (ou DMPA),
- l'acide 2,2-di(hydroxyméthyl)butyrique,
- l'acide 2,2-di(hydroxyméthyl)pentanoïque.

Selon un mode de réalisation tout particulièrement préféré, le diol carboxylique (C) mis en œuvre dans l'étape (i) est l'acide 2,2-di(hydroxyméthyl)propionique, également dénommé acide $\alpha,\alpha$-diméthylolpropionique (désigné commodément sous l'acronyme anglais DMPA) de formule :

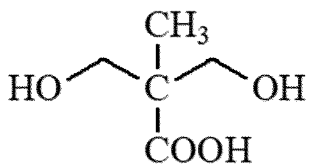

Les diols carboxyliques (C) de formule (iC) sont préparés selon des procédés classiques de synthèse organique, tels que décrits par exemple dans le brevet US 3412054 de UNION CARBIDE, et nombreux sont ceux, tel le DMPA, disponibles commercialement.

On fait réagir, dans l'étape (i) du procédé selon l'invention, le polyisocyanate (A), la composition de polyols (B) et le diol carboxylique (C) dans des quantités correspondant à un excès du nombre équivalent de groupes -NCO du polyisocyanate (A) par rapport au nombre équivalent de groupes -OH apportés par la composition (B) et le diol (C).

De préférence, ces quantités correspondent à un rapport équivalent -NCO/-OH compris entre 1,1 et 4,2, de préférence entre 1,1 et 3,8, plus préférentiellement entre 1,1 et 2.

Ledit rapport est défini comme étant égal au nombre équivalent de groupes -NCO du polyisocyanate (A), divisé par la somme des nombres équivalents de groupes -OH apportés par la composition de polyols (B) et par le diol carboxylique (C).

Les quantités pondérales des réactifs à charger dans le réacteur sont déterminées sur la base de ce rapport équivalent -NCO/-OH et à partir de l'indice d'hydroxyle $I_{OH}$ total de la composition (B) et des masses moléculaires de (A) et (C). L'indice d'hydroxyle $I_{OH}$ des polyols (B1) et (B2) compris (ou constitutifs) de la composition (B) est le nombre

de fonctions hydroxyle par gramme de polyol, exprimé sous la forme du nombre équivalent de milligrammes de KOH utilisés dans le dosage des fonctions hydroxyle. L'indice d'hydroxyle $I_{OH}$ d'un polyol de fonctionnalité f et de masse moléculaire moyenne en nombre Mn peut se déduire également de la formule suivante :

$$I_{OH} = (56,1 \,.\, f \,.\, 1000) / Mn$$

dans laquelle le signe « . » indique une multiplication.

Les quantités relatives de la composition de polyols (B) et du diol carboxylique (C) à introduire dans le réacteur pour réaction dans l'étape (i) correspondent généralement à un rapport molaire : nombre de mole de (C)/ nombre de mole des polyols compris ou constitutifs de (B) (plus particulièrement des polyols (B1) et (B2)) qui peut varier dans un large domaine, pouvant aller de 0,04 à 20, de préférence de 0,08 à 0,5, plus préférentiellement de 0,08 à 0,2.

La réaction de polyaddition de l'étape (i) est généralement mise en œuvre en présence d'un catalyseur qui peut être tout catalyseur connu par l'homme du métier pour catalyser la formation de polyuréthane par réaction d'un polyisocyanate et d'au moins un polyol. Un tel catalyseur est par exemple choisi parmi les carboxylates de bismuth et/ou de zinc. Comme exemples disponibles commercialement, on peut citer le BORCHI® KAT 315 de la société Borchers GmbH qui est un néodécanoate de bismuth ; ou encore le BORCHI® KAT 15 de cette même société qui est un néodécanoate de zinc.

Enfin, la réaction de polyaddition est généralement mise en œuvre, dans des conditions anhydres, à une température comprise entre 60°C et 120°C.

<u>**Etape (ii)**</u> :

L'étape (ii) est constituée par la réaction de la composition de copolyuréthanes formée à l'étape (i) avec une amine (D) de formule (iiD) :

N(R)(R')(R") (iiD)

et correspond à la neutralisation du groupe -COOH pendant qui est compris dans la chaîne principale desdits copolyuréthanes.

Dans la formule (iiD) :

- R, R' et R", identiques ou différents, représentent chacun un radical hydrocarboné saturé, insaturé ou aromatique, comprenant éventuellement un hétéroatome choisi parmi N, O et S ; et
- R, R' et R" étant en outre tels que l'amine tertiaire (D) de formule N(R)(R')(R") est une amine ou polyamine linéaire, ramifiée ou cyclique dont la masse molaire moyenne en nombre Mn va de 59 g/mol à 6000 g/mol et qui présente un pKa supérieur à 8.

Selon un mode de réalisation, l'amine tertiaire (D) est choisie parmi :

- une polyéthylèneimine,
- une polypropylèneimine,
- la triéthylamine (ou TEA, de pKa égal à 10,75),
- le 1,8-diazabicyclo(5.4.0)undec-7-ene (ou DBU) dont la formule développée est :

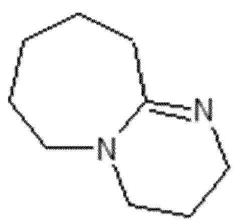

  et dont le pKa est égal à 12 ;
- le 1,4-diazabicyclo[2.2.2]octane (ou DABCO), dont la formule développée est :

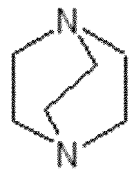

et dont le pKa est égal à 8,87 ;

- le 1,5-diazabicyclo[4.3.0]non-5-ène (DBN), dont la formule développée est :

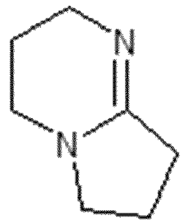

et dont le pKa est égal à 12 ;

- la N,N-dicyclohexylmethylamine (ou DCHMA), dont le pKa est égal à 11 ; et
- la trihexylamine (ou THA), dont le pKa est égal à 10,5.

Selon une variante davantage préférée, le pKa de l'amine correspondante est supérieur ou égal à 10.

Selon une variante tout particulièrement préférée, l'amine (D) est la triéthylamine (TEA) ou la trihexylamine (THA).

Selon une autre variante préférée, l'amine (D) est choisie parmi le DBU et le DABCO. Une telle amine est souvent incorporée en tant que catalyseur de réticulation dans une composition de mastic et/ou d'adhésif comprenant un SPUR. Elle a alors pour inconvénient de conduire, après réticulation de ladite composition, à un jaunissement du joint adhésif, probablement lié à sa migration en surface dudit joint. Au contraire, l'incorporation dans l'étape (ii) du procédé selon l'invention d'une telle amine, en tant qu'agent de neutralisation du groupe carboxylate pendant, a pour effet avantageux l'absence de jaunissement du joint adhésif qui résulte de la réticulation de la composition de mastic et/ou d'adhésif qui comprend la composition de copolyuréthanes silylés ioniques préparée par ledit procédé. Un tel effet est probablement lié à l'intégration chimique de l'ammonium quaternaire correspondant, dans la chaîne principale desdits copolyuréthanes.

L'amine (D) est avantageusement introduite dans l'étape (ii) dans une quantité correspondant à un rapport équivalent molaire : [nombre de mole de (D)]/[nombre de mole du diol carboxylique (C) introduit dans l'étape (i)] qui est compris dans un domaine allant de 0,5 à 2,5, de préférence de 0,5 à 2.

La réaction de neutralisation est avantageusement mise en œuvre à une température comprise dans un domaine allant de 20°C à 80°C, de préférence de 20°C à 40°C.

<u>**Etape (iii)**</u> :

L'étape (iii) est constituée par la réaction de la composition de copolyuréthanes à groupe terminaux -NCO formée à l'étape (ii) avec un aminosilane (E) dérivé d'une amine secondaire, de formule (iiiE) :

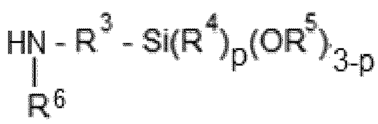

(iiiE)

dans laquelle :

- $R^3$ représente un radical divalent alkylène linéaire ou ramifié comprenant de 1 à 6 atomes de carbone ;
- $R^4$ représente un radical alkyl linéaire ou ramifié comprenant de 1 à 4 atomes de carbone ;

- $R^5$ représente un radical alkyl linéaire ou ramifié comprenant de 1 à 4 atomes de carbone, un radical alkylcarbonyl comprenant de 2 à 8 atomes de carbone, ou un radical dialkylimino comprenant de 3 à 8 atomes de carbone ; et
- p est un nombre entier égal à 0, 1 ou 2 ;
- $R^6$ représente un radical phényle, un radical alkyle linéaire, ramifié ou cyclique comprenant de 1 à 6 atomes de carbone, ou un radical choisi parmi les radicaux :

  - de formule (IIc) :

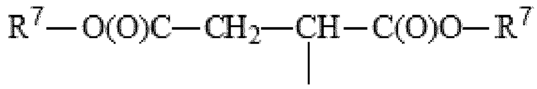

(IIc)

  - de formule (IId) :

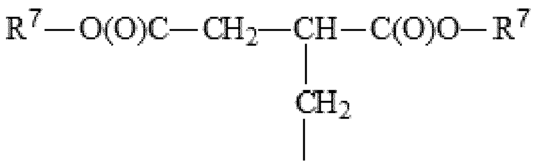

(IId) ;

  - de formule :

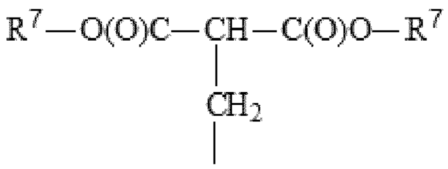

(IIe)

dans lesquelles $R^7$ est un radical alkyle linéaire ou ramifié comprenant de 1 à 6 atomes de carbone ;

  - de formule (IIf) :

$$-CH_2-COO^-, HN^+(R)(R')(R'') \qquad (IIf)$$

; et
  - de formule (IIg) :

$$-CH_2-CH_2-COO^-, HN^+(R)(R')(R'') \qquad (IIg)$$

dans lesquelles R, R’ et R" sont les radicaux tels que définis précédemment.

Les aminosilanes de formule (iiiE) sont largement disponibles dans le commerce.

On peut citer à titre d’exemple la N -(3(triméthoxysilyl)propyl)butylamine) disponible sous la dénomination Dynasylan® 1189 auprès de Evonik, de formule :

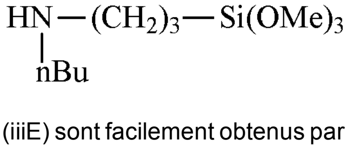

D’autres aminosilanes de formule (iiiE) sont facilement obtenus par synthèse à partir de produits commerciaux. Il en est ainsi du composé dénommé par la suite "aminotriéthoxysilane DEM + A1100", qui répond à la formule :

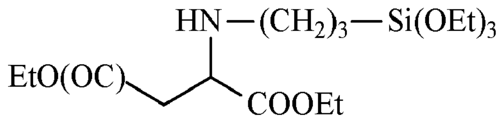

et qui est obtenu par réaction du maléate de diéthyle avec le γ-aminopropyltriéthoxysilane. Ce dernier composé est disponible sous la dénomination Silquest® A1100 auprès de Momentive et répond à la formule :

$H_2N-(CH_2)_3-Si(OEt)_3$

Les aminosilanes de formule (iiiE) dans laquelle $R^6$ représente un radical de formule (IIf) ou (IIg) peuvent être obtenus par neutralisation, au moyen de l'amine (D) de formule (iiD), des composés silylés substitués par un aminoacide qui sont décrits dans le brevet US 9567354 au nom de SHIN-ETSU CHEMICAL CO LTD.

De façon préférée, dans la formule (iiiE) de l'aminosilane (E) :

- $R^3$ représente le radical méthylène ou n-propylène, de préférence n-propylène ;
- $R^4$ et $R^5$, identiques ou différents, représentent chacun le radical méthyle ou éthyle, de préférence méthyle ;
- p égale 0 ; et/ou
- $R^6$ représente un radical alkyle linéaire comprenant de 1 à 4 atomes de carbone, préférentiellement un n-butyle, ou un radical de formule (IIc) dans laquelle $R^7$ est un radical alkyle comprenant de 1 à 3 atomes de carbone, $R^7$ étant préférentiellement un radical éthyle.

Pour former la composition de copolyuréthanes silylés ioniques à groupes terminaux uréido-alkylène-alkoxysilane, la composition de copolyuréthanes à groupe terminaux -NCO obtenue à l'étape (ii) est avantageusement mise à réagir, conformément à l'étape (iii), avec une quantité substantiellement stœchiométrique de l'aminosilane (E). Les quantités molaires de ces réactifs correspondent avantageusement à un rapport équivalent -NCO/-NH qui est compris entre 0,90 et 1,1, et est égal de préférence à environ 1.

Durant cette étape (iii), la réaction du groupe -NH de l'aminosilane (E) sur chacun des 2 groupes terminaux -NCO des copolyuréthanes compris dans la composition formée à l'étape (ii) conduit à la formation d'une fonction urée.

L'étape (iii) est généralement mise en œuvre, également dans des conditions anhydres, à une température comprise dans un domaine allant de 20°C à 80°C, de préférence de 20°C à 40°C.

Avantageusement, le procédé selon l'invention est mis en œuvre en absence d'eau en tant que solvant. Ainsi, le procédé selon l'invention est mis en œuvre sans ajout d'eau libre, c'est-à-dire autre que celle comprise de manière inhérente dans les ingrédients mis en œuvre. En particulier, la teneur en eau introduite dans le procédé selon l'invention est inférieure à 5 % en poids par rapport au poids total des ingrédients mis en œuvre, de préférence inférieure à 3 % en poids, notamment inférieure à 1 % en poids.

Selon une variante préférée, le procédé selon l'invention est mis en œuvre en présence d'un agent plastifiant et/ou d'un solvant n'étant pas de l'eau qui est, de manière plus préférée, introduit à l'étape (i).

A titre d'exemple d'agent plastifiant utilisable, on peut utiliser n'importe quel agent plastifiant habituellement utilisé dans le domaine des mastics. La viscosité réduite obtenue grâce à la mise en œuvre d'un tel agent plastifiant pour la composition de copolyuréthanes silylés ioniques est avantageuse pour sa manipulation dans les installations industrielles.

De préférence, on utilise :

- le diisodécyl phtalate, tel que commercialisé sous le nom PALATINOLTM DIDP par la Société BASF,
- un ester d'acide alkylsulphonique et de phénol, tel que commercialisé sous le nom MESAMOLL® par la société LANXESS,
- le diisononyl-1,2-cyclohexanedicarboxylate, tel que commercialisé sous le nom HEXAMOLL DINCH® par la société BASF,
- le tétravalérate de pentaérythritol, tel que commercialisé sous le nom PEVALEN™ par la Société PERSTORP,
- une résine polysiloxane, en particulier un silsesquioxane de masse moléculaire moyenne en nombre allant de 400 g/mol à 4000 g/mol, préférentiellement de 500 g/mol à 2500 g/mol, telle que le DOW CORNING® 3074 commercialisée par DOW dont le Mn est compris entre 1300-1500 g/mole.

A titre d'exemple de solvant utilisable, on peut utiliser un solvant polaire aprotique, qui est choisi de préférence parmi l'acétate d'éthyle, le tétrahydrofurane (ou THF), le carbonate de propylène, le N,N-diméthylformamide (ou DMF), l'acétonitrile (ou cyanure de méthyle) ou encore le diméthylsulfoxyde (ou DMSO).

En revanche, l'eau n'est pas considérée comme un solvant dans la présente invention.

L'agent plastifiant et/ou le solvant sont généralement introduits dans l'étape (i) à raison d'une quantité exprimée en % poids allant de 5% à 20%, sur la base du poids total des réactifs mis en œuvre.

Selon une autre variante, le procédé selon l'invention est mis en œuvre en l'absence d'agent plastifiant et/ou de solvant.

Selon une autre variante préférée, éventuellement combinée avec les 2 précédentes, un agent absorbeur d'humidité (ou agent desséchant) est introduit à la fin de l'étape (iii) du procédé selon l'invention, après réaction de l'aminosilane (E) avec la composition de copolyuréthanes à groupe terminaux -NCO formée à l'étape (ii).

Des agents absorbeurs d'humidité appropriés sont notamment des alkoxysilanes tels que des trialkoxysilanes (particulièrement des triméthoxysilanes) et des alkoxysilanes contenant un groupe amino, mercapto ou époxy. On peut en donner comme exemples le vinyltriméthoxysilane (ou VTMO), le gamma-glycidyloxypropyltriméthoxysilane, le N-beta-(aminoéthyl)-gamma-aminopropyltriméthoxysilane, l'aminopropyltriméthoxysilane, le triméthoxyméthylsilane. Ces composés sont disponibles commercialement ; par exemple le vinyltriméthoxysilane est disponible sous la dénomination commerciale DYNASYLAN® VTMO auprès de la société Evonik. Un tel agent prolonge avantageusement la durée de conservation de la composition de copolyuréthanes silylés ioniques formée par le procédé selon l'invention, durant le stockage et le transport et avant son utilisation.

L'agent desséchant est généralement introduit à la fin de l'étape (iii) à raison d'une quantité exprimée en % poids allant de 0,5% à 5%, sur la base du poids total des réactifs mis en œuvre.

Selon une autre variante, le procédé selon l'invention est mis en œuvre en l'absence d'agent desséchant.

**<u>Composition de copolyuréthanes silylés ioniques</u>** :

La présente invention a également pour objet, en second lieu, une composition de copolyuréthanes silylés ioniques comprenant 2 groupes terminaux uréido-alkylène-alkoxysilane, ladite composition étant susceptible d'être obtenue par le procédé de préparation selon l'invention.

Les 2 groupes terminaux uréido-alkylène-alkoxysilane desdits copolyuréthanes répondent, respectivement, aux formules :

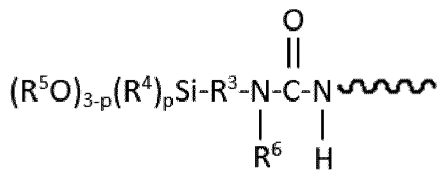

et

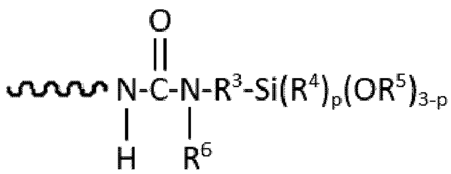

dans lesquelles, $R^3$, $R^4$, $R^5$, $R^6$ et p sont tels que définis précédemment.

**<u>Composition réticulable d'adhésif et/ou mastic:</u>**

La présente invention a également pour objet, en troisième lieu, une composition réticulable d'adhésif et/ou mastic comprenant :

- au moins une composition de copolyuréthanes silylés ioniques à groupes terminaux uréido-alkylène-alkoxysilane selon l'invention, et
- au moins une charge.

Selon un mode de réalisation préféré, la composition réticulable d'adhésif et/ou mastic comprend :

- de 10% à 50 % en poids de ladite composition de copolyuréthanes, de préférence de 20% à 45 % en poids, de préférence encore de 35% à 45 % en poids, et

- de 20% à 60 % en poids de la charge, de préférence de 30% à 55 % en poids, de préférence encore de 40% à 55 % en poids ;
  ces pourcentages en poids étant exprimés sur la base du poids total de ladite composition.

La (ou les) charge(s) utilisable(s) dans la composition selon l'invention peu(ven)t être choisie(s) parmi les charges minérales et les mélanges de charges organiques et de charges minérales.
A titre d'exemple de charge(s) minérale(s) utilisable(s), on peut utiliser n'importe quelle(s) charge(s) minérale(s) habituellement utilisée(s) dans le domaine des compositions adhésive et/ou de mastic. Ces charges se présentent sous la forme de particules de géométrie diverse. Elles peuvent être par exemples sphériques, fibreuses, ou présenter une forme irrégulière.
De préférence, on utilise de l'argile, du quartz, des charges carbonatées.
Plus préférentiellement, on utilise des charges carbonatées, telles que les carbonates de métaux alcalin ou alcalino-terreux, et plus préférentiellement le carbonate de calcium.
Ces charges peuvent être naturelles ou traitées, par exemple à l'aide d'un acide organique tel que l'acide stéarique, ou d'un mélange d'acides organiques constitué majoritairement d'acide stéarique.
On peut utiliser également des microsphères creuses minérales telles que des microsphères creuses de verre, et plus particulièrement celles en borosilicate de sodium et de calcium ou en aluminosilicate.
A titre d'exemple de charge(s) organique(s) utilisable(s), on peut utiliser n'importe quelle(s) charge(s) organique(s) et notamment polymérique(s) habituellement utilisée(s) dans le domaine des compositions adhésives et/ou de mastic.
On peut utiliser par exemple du polychlorure de vinyle (PVC), des polyoléfines, du caoutchouc, de l'éthylène vinyl acétate (EVA), des fibres aramides telles que le Kevlar®.
On peut utiliser également des microsphères creuses en polymère thermoplastique expansibles ou non expansibles. On peut notamment citer des microsphères creuses en chlorure de vinylidène/acrylonitrile.
De préférence, on utilise du PVC.
La taille moyenne de particule de la (des) charge(s) utilisable(s) est de préférence inférieure ou égale à 10 microns, plus préférentiellement inférieure ou égale à 3 microns, afin d'éviter leur sédimentation dans la composition adhésive et/ou de mastic selon l'invention au cours de son stockage.
La taille moyenne de particule est mesurée pour une distribution granulométrique en volume et correspondant à 50% en volume de l'échantillon de particules analysé. Lorsque les particules sont sphériques, la taille moyenne de particule correspond au diamètre médian (D50 ou Dv50) qui correspond au diamètre tel que 50% des particules en volume ont une taille inférieure audit diamètre. Dans la présente demande, cette valeur est exprimée en micromètres et déterminée selon la Norme NF ISO 13320-1 (1999) par diffraction laser sur un appareil de type MALVERN
Avantageusement, la composition selon l'invention ne comprend pas d'eau en tant que solvant. Ainsi, la teneur en eau dans la composition selon l'invention est avantageusement inférieure à 5 % en poids par rapport au poids total de ladite composition, de préférence inférieure à 3 % en poids, en particulier inférieure à 1 % en poids.
Selon un mode de réalisation, la composition selon l'invention peut comprendre en outre au moins un agent absorbeur d'humidité, un agent promoteur d'adhérence, un agent plastifiant et/ou un agent de rhéologie.
Des agents absorbeurs d'humidité (ou agents desséchants) appropriés sont tels que décrits précédemment. Une quantité d'agents absorbeurs d'humidité dans la composition comprise entre 0,5% et 5 % en poids, sur la base du poids de ladite composition, sera en général convenable.
Certains de ces composés peuvent également agir en tant qu'agent promoteur d'adhérence, particulièrement les trialkoxysilanes contenant un groupe amino, mercapto ou époxy. On peut en donner comme exemple :

- la (N -(3(trimethoxysilyl)propyl)ethylene diamine commercialisée sous la dénomination de GENIOSIL® GF9 par la société WACKER, ou encore
- le 3-aminopropyltriméthoxysilane commercialisé sous la dénomination de Silquest A-1110 par Momentive.

Une quantité de 0,5% à 2 % en poids (sur la base du poids de ladite composition) sera en général appropriée.
Les agents plastifiants utilisables, sont également tels que décrits précédemment. L'agent plastifiant est généralement inclus dans la composition selon l'invention à raison de 5% à 20% en poids, de préférence de 10% à 15% en poids, sur la base du poids de ladite composition.
Les agents de rhéologie utilisables sont n'importe quel agent de rhéologie habituellement utilisé dans le domaine des compositions adhésives et/ou de mastic.
De préférence, on utilise un ou plusieurs agents de rhéologie choisis parmi les agents thixotropiques, et plus préférentiellement parmi :

- les plastisols de PVC, correspondant à une suspension de PVC dans un agent plastifiant miscible avec le PVC,

obtenue in situ par chauffage à des températures allant de 60°C à 80°C. Ces plastisols peuvent être ceux décrits notamment dans l'ouvrage « Polyurethane Sealants », Robert M. Evans, ISBN 087762-998-6,

- les polyamides thixotropes comme le Thixatrol® AS8053, disponible auprès de Elementis ;
- la silice pyrogénée,
- des dérivés d'urée issus de la réaction d'un monomère diisocyanate aromatique tel que le 4,4'-MDI avec une amine aliphatique telle que la butylamine. La préparation de tels dérivés d'urée est décrite notamment dans la demande FR 1 591 172.

La teneur totale en agent(s) de rhéologie(s) pouvant être inclus dans la composition selon l'invention peut varier de 1% à 40% en poids, de préférence de 5% à 30 % en poids, plus préférentiellement de 10% à 25% en poids, sur la base du poids de ladite composition.

La composition réticulable de mastic et/ou d'adhésif selon l'invention est de préférence stockée dans un environnement anhydre, par exemple dans un conditionnement hermétique, où ladite composition se trouve à l'abri de l'humidité et de préférence à l'abri de la lumière.

Selon un mode de réalisation préféré, la composition réticulable de mastic et/ou d'adhésif présente un allongement à la rupture supérieur à 100%. Dans la présente invention, l'allongement à la rupture est mesuré selon la norme NF ISO 37 (Mars 2012), en utilisant des éprouvettes de type « haltère » de longueur 20 mm, de largeur 4 mm et d'épaisseur 3 mm.

De préférence, l'allongement à la rupture de ladite composition est supérieur ou égal à 150 %, de préférence supérieur ou égal à 200%.

**Procédé de préparation de la composition réticulable de mastic et/ou d'adhésif** :

La présente invention concerne encore un procédé de préparation d'une composition réticulable de mastic et/ou d'adhésif selon l'invention, ledit procédé de préparation comprenant une étape dans laquelle le ou les ingrédient(s) éventuellement présent(s) dans ladite composition est (sont) mélangé(s) à une composition de copolyuréthanes non ioniques selon l'invention, généralement à une température inférieure ou égale à 50°C, de préférence allant de 5°C à 45°C, et mieux encore allant de 20°C à 30°C.

Lorsque, conformément à une variante du procédé de fabrication de la composition de copolyuréthanes silylés ioniques selon l'invention, celui-ci est mis en œuvre en l'absence d'agent plastifiant et/ou de solvant, et/ou en l'absence d'agent absorbeur d'humidité, ces derniers sont alors avantageusement introduits lors de la préparation de la composition de mastic et/ou d'adhésif, parmi les ingrédients mélangés avec ladite composition de copolyuréthanes. L'agent plastifiant, le solvant et l'agent absorbeur d'humidité sont tels que décrits ci-avant.

L'ajout et le mélange se font dans des conditions anhydres.

**Article comprenant la composition réticulable adhésive et/ou de mastic** :

La présente invention a également pour objet un article comprenant la composition réticulable adhésive et/ou de mastic selon l'invention dans un conditionnement hermétique, à l'abri de l'air. De préférence, le conditionnement hermétique est un sac de polyéthylène ou une cartouche de polyéthylène munie d'un opercule.

**Procédé d'assemblage de 2 substrats** :

L'invention concerne enfin un procédé d'assemblage de 2 substrats comprenant :

- l'enduction de la composition réticulable d'adhésif et/ou de mastic selon l'invention à température ambiante, sous la forme d'une couche d'épaisseur comprise entre 0,2 et 5 mm, de préférence entre 1 et 3 mm, sur au moins l'un des 2 substrats à assembler ; puis
- la mise en contact effective des 2 substrats.

Les substrats appropriés sont, par exemple, des substrats inorganiques tels que le verre, les céramiques, le béton, les métaux ou les alliages (comme l'aluminium, l'acier, les métaux non ferreux, les métaux galvanisés) ; ou bien des substrats organiques comme le bois, des plastiques comme le PVC, le polycarbonate, le PMMA, le polyéthylène, le polypropylène, les polyesters, les résines époxy; les substrats en métal et composites revêtus de peinture (comme dans le domaine des automobiles).

**Exemples** :

Les exemples suivants sont donnés à titre purement illustratif de l'invention et ne sauraient être interprétés pour en limiter la portée.

**Exemple A (comparatif)**

**1) Préparation d'un copolyuréthane silylé ionique A à groupes terminaux triméthoxysilane** :

Etape (i) : Synthèse d'un copolyuréthane à terminaisons isocyanates

Dans un réacteur de 1 litre équipé d'une agitation, de moyens de chauffe, d'un thermomètre et relié à une pompe à vide, on introduit :

- 67,34g de polypropylène glycol ACCLAIM® 4200 ayant un nombre hydroxyle IOH égal à 28 mg KOH/g, correspondant à un nombre de fonctions -OH égal à 33,5mmol ;
- 15 g de silsesquioxane DOW CORNING® 3074 ; et
- 0,5 g de DMPA (masse molaire de 134, 13 g/mol) correspondant à un nombre de fonctions -OH égal à 7,4 mmol.

On laisse sous vide pendant 2 heures à 110°C pour déshydratation.
Le réacteur est ensuite refroidi à 90°C afin d'introduire sous azote :

- 7,87 g d'isophorone diisocyanate (IPDI) de masse molaire égale à 222,3 g/mol, soit un nombre de fonctions -NCO égale à 70,8 mmol ; et
- 0,15 g du catalyseur BORCHI® KAT 315 (néodécanoate de bismuth).

Les quantités de réactifs introduites correspondent à un rapport équivalent molaire - NCO/-OH égal à 1,73.
Le mélange est maintenu sous agitation jusqu'à atteindre un % NCO en poids de 1,7 %, correspondant à un nombre de fonctions -NCO égal à 30,6 mmol.

Etape (ii) : Synthèse d'un copolyuréthane ionique à terminaisons isocyanates

On introduit ensuite dans le milieu réactionnel à 40°C 0,38 g de TriEthylAmine (TEA) (masse molaire égale à 101,19 g/mol) soit 3,75 mmol, en laissant l'agitation pendant 1 heure.

Etape (iii) : Synthèse du copolyuréthane silylé ionique

On introduit enfin dans le milieu réactionnel 7,2 g de l'aminosilane (N - (3(trimethoxysilyl)propyl)butylamine) (Dynasylan® 1189), de masse molaire égale à 235,4 g/mol, correspondant à un nombre de fonctions -NH- égal à 30.6 mmol.
Le rapport équivalent molaire -NCO/-NH- est égal à 1.
L'ensemble est chauffé à 40°C et maintenu sous agitation jusqu'à réaction complète, i.e. jusqu'à ce que la bande caractéristique des fonctions -NCO ne soit plus détectable par spectroscopie infra-rouge.
On ajoute alors 1 g de vinyltriméthoxysilane (VTMO).
On obtient 100 g d'un mélange constitué d'environ 84 g de copolyuréthane silylé ionique, 15 g de silsesquioxane Dow Corning® 3074 et 1 g de VTMO. Ce mélange est conditionné dans des cartouches en aluminium à l'abri de l'humidité.

**2) Préparation d'une composition de mastic A comprenant le copolyuréthane silylé ionique A obtenu en 1)** :

On prépare par simple mélange dans un mélangeur rapide le mastic A dont la composition est indiquée ci-dessous sur une base pondérale :

- 38,11 % en poids du mélange de copolyuréthane silylé ionique A obtenu ci-dessus ;
- 45,18 % en poids de carbonate de calcium précipité de taille moyenne de particules inférieure à 1 μm (Calofort SV, disponible auprès de la société SPECIALITY MINERAL ;
- 9,6 % en poids de carbonate de calcium broyé de taille moyenne de particules environ 3 μm (Immerseal 36 S, disponible auprès de la société Imerys) ;
- 3,28 % d'un polyamide thixotrope (le Thixatrol AS8053, disponible auprès de la société Elementis) ;

- 2,83 % en poids de vinyltriméthoxysilane (VTMO), comme agent absorbeur d'humidité ;
- 1 % en poids de 3-aminopropyltriméthoxysilane (commercialisé sous la dénomination de Silquest A-1110 par Momentive) comme agent promoteur d'adhérence.

La composition de mastic obtenue est laissée sous agitation et sous pression réduite de 20 mbar durant 15 minutes avant d'être conditionnée dans une cartouche en polyéthylène, pour éviter la présence d'humidité.
La composition est ensuite soumise aux tests suivants.

**Mesure du temps de réticulation** :

Le temps de réticulation est mesuré par la détermination du temps de formation de peau.
A cet effet, un cordon de mastic (d'environ 10 cm de longueur et de diamètre environ 1 cm) est d'abord déposé sur un support cartonné. Ensuite, à l'aide d'un embout de pipette en polyéthylène basse densité (LDPE), la surface du mastic est touchée toutes les minutes pendant 2 heures au maximum, afin de déterminer le temps exact à laquelle se forme la peau en surface. Ce test est réalisé dans des conditions contrôlées d'humidité et de température (23°C et 50% d'humidité relative).
Le résultat obtenu est exprimé en minutes et indiqué dans le tableau 2.

**Mesure de la contrainte et de l'allongement à la rupture par essai de traction** :

Le principe de la mesure consiste à étirer dans une machine de traction, dont la mâchoire mobile se déplace à une vitesse constante égale à 100 mm/minute, une éprouvette standard constituée de la composition de mastic réticulée et à enregistrer, au moment où se produit la rupture de l'éprouvette, la contrainte de traction appliquée (en MPa) ainsi que l'allongement de l'éprouvette (en %).
L'éprouvette standard est en forme d'haltère, comme illustré dans la norme internationale ISO 37. La partie étroite de l'haltère utilisée a pour longueur 20 mm, pour largeur 4 mm et pour épaisseur 3 mm.
Pour préparer l'haltère, on extrude à température ambiante dans un moule approprié la composition conditionnée comme décrit précédemment, et on la laisse réticuler durant 14 jours dans des conditions standards (23°C et 50 % d'humidité relative).
Cette détermination est répétée sur 5 haltères et la moyenne obtenue est indiquée dans le tableau 2.

**Exemples 1-5 (selon l'invention) :**

**1) Préparation d'une composition de copolyuréthanes silylés ioniques à groupes terminaux triméthoxysilane :**

On répète le procédé de l'exemple A en remplaçant dans l'étape (i), l'ACCLAIM® 4200 par les VORANOL® EP1900, VORANOL® P2000 et TERATHANE® 650 dans les quantités indiquées en poids dans le Tableau 1, et avec pour les autres réactifs et ingrédients les poids également indiqués dans le Tableau 1.

**2) Préparation d'une composition de mastic comprenant la composition de copolyuréthanes silylés obtenue en 1)** :

Ce mastic est préparé en répétant l'exemple A 2), sauf que l'on remplace le copolyuréthane silylé ionique A par la composition de copolyuréthanes silylés obtenue en 1).
Les résultats sont indiqués dans le Tableau 2.

Tableau 1

| Préparation de copolyuréthanes silylés ioniques à groupes terminaux triméthoxysilane | | | | | | | |
|---|---|---|---|---|---|---|---|
| Etape | Ingrédients | Ex. A (comp.) | Ex. 1 | Ex. 2 | Ex. 3 | Ex. 4 | Ex. 5 |
| (i) | ACCLAIM® 4200 (en g) | 67,34 | - | - | - | - | - |
| | VORANOL® EP1900 (B1, en g) | - | 55,81 | 47,58 | 40,20 | 39,83 | 32,33 |
| | VORANOL® P2000 (B2-1, en g) | - | 13,95 | 13,59 | 16,75 | 13,30 | 12,93 |
| | TERATHANE® 650 (B2-2, en g) | - | - | 6,80 | 10,10 | 13,30 | 19,40 |
| | B1/(B1 + B2) (% molaire) | - | 67% | 41 % | 29% | 27% | 18 % |
| | B2/(B 1 + B2) (% molaire) | - | 33 % | 59% | 71 % | 73 % | 82% |
| | Dow Corning® 3074 (en g) | 15 | 15 | 15 | 15 | 15 | 15 |
| | DMPA (en g) | 0,5 | 0,5 | 0,5 | 0,5 | 0,5 | 0,5 |
| | Rapport molaire DMPA/ACCLAIM® 4200 ou DMPA/(B1 + B2) | 0,19 | 0,18 | 0,13 | 0,11 | 0,10 | 0,084 |
| | IPDI (en g) | 7,87 | 8,01 | 9,80 | 10,81 | 11,49 | 13,11 |
| | BORCHI® KAT 315 (en g) | 0,15 | 0.15 | 0.15 | 0.15 | 0.15 | 0.15 |
| | Rapport molaire équivalent -NCO/-OH | 1.73 | 1,5 | 1,4 | 1,3 | 1,3 | 1,2 |
| (ii) | TEA (en g) | 0,38 | 0,38 | 0,38 | 0,38 | 0,38 | 0,38 |
| | Rapport molaire équivalent TEA /DMPA | 1,00 | 1,00 | 1,00 | 1,00 | 1,00 | 1,00 |
| (iii) | Dynasylan® 1189 (en g) | 7,2 | 5,24 | 5,24 | 5,24 | 5,24 | 5,24 |
| | Rapport équivalent molaire -NCO/- NH- | 1 | 1 | 1 | 1 | 1 | 1 |
| | VTMO (en g) | 1 | 1 | 1 | 1 | 1 | 1 |

Tableau 2

| Résultats concernant les mastics silylés | | | | | | |
|---|---|---|---|---|---|---|
| | Ex. A | Ex. 1 | Ex. 2 | Ex. 3 | Ex. 4 | Ex. 5 |
| Temps de réticulation (min) | 30 | 20 | 40 | 35 | 30 | 28 |
| Essai de traction - Contrainte à la rupture (MPa) | 4 | 3,0 | 3,4 | 3,2 | 3,8 | 3,5 |
| Essai de traction - Allongement à la rupture (%) | 85 | 180 | 160 | 250 | 280 | 245 |

**Exemples 6-9 (selon l'invention)** :

On répète le procédé de préparation de la composition de copolyuréthanes silylés ioniques à groupes terminaux triméthoxysilane de l'exemple 4, en remplaçant dans l'étape (ii) la TEA par l'amine indiquée dans le Tableau 1'. Les quantités des réactifs et ingrédients utilisés sont indiqués dans le Tableau 1'.

On répète également la préparation du mastic de l'exemple A 2), avec les compositions de copolyuréthanes ainsi obtenues. Les résultats sont indiqués dans le Tableau 2'.

Il ressort de ces tableaux de résultats que les compositions de copolyuréthanes silylés ioniques selon les exemples 1 à 9, permettent, de manière tout à fait avantageuse par rapport au copolyuréthane silylé ionique de l'exemple A, d'obtenir des mastics silylés qui, pour un temps de réticulation comparable, offrent un joint adhésif avec une contrainte à la rupture tout à fait acceptable ( voisine de 3 MPa) et dont l'allongement à la rupture (supérieur à 150 %) est très significativement augmenté par rapport au mastic silylé correspondant à l'exemple A.

Tableau 1'

| Préparation de copolyuréthanes silylés ioniques à groupes terminaux triméthoxysilane | | | | | |
|---|---|---|---|---|---|
| Etape | Ingrédients | Ex. 6 | Ex. 7 | Ex. 8 | Ex. 9 |
| (i) | VORANOL® EP1900 (B1, en g) | 39.65 | 39.71 | 39.77 | 39.54 |
| | VORANOL® P2000 (B2-1, en g) | 13.22 | 13.24 | 13.26 | 13.18 |
| | TERATHANE® 650 (B2-2, en g) | 13.22 | 13.24 | 13.26 | 13.18 |
| | Dow Corning® 3074 (en g) | 15 | 15 | 15 | 15 |
| | B1/(B1 + B2) (% molaire) | 27 | 27 | 27 | 27 |
| | B2/(B1 + B2) (% molaire) | 73 | 73 | 73 | 73 |
| | DMPA (en g) | 0.5 | 0.5 | 0.5 | 0.5 |
| | Rapport molaire DMPA/(B 1 + B2) | 0.10 | 0.10 | 0.10 | 0.10 |
| | IPDI (en g) | 11.46 | 11.45 | 11.5 | 11.43 |
| | BORCHI® KAT 315 (en g) | 0.15 | 0.15 | 0.15 | 0.15 |
| | Rapport molaire équivalent -NCO/-OH | 1.27 | 1.27 | 1.27 | 1.27 |
| (ii) | DCHMA (en g) | 0.73 | | | |
| | DBU (en g) | | 0.57 | | |
| | DABCO (en g) | | | 0.42 | |
| | THA (en g) | | | | 1.01 |
| | Rapport molaire équivalent amine /DMPA | 1 | 1 | 0.9 | 1 |
| (iii) | Dynasylan® 1189 (en g) | 5.22 | 5.23 | 5.23 | 5.2 |
| | Rapport équivalent molaire -NCO/-NH- | 1 | 1 | 1 | 1 |
| | VTMO (en g) | 1 | 1 | 1 | 1 |

Tableau 2'

| Résultats concernant les mastics silylés | | | | |
|---|---|---|---|---|
| | Ex. 6 | Ex. 7 | Ex. 8 | Ex. 9 |
| Temps de réticulation (min) | 15 | 35 | 35 | 28 |
| Essai de traction - Contrainte à la rupture (MPa) | 3,5 | 2,8 | 3,2 | 3,3 |
| Essai de traction - Allongement à la rupture (%) | 255 | 315 | 285 | 295 |

## Revendications

**1.** Procédé de préparation d'une composition de copolyuréthanes silylés ioniques comprenant 2 groupes terminaux uréido-alkylène-alkoxysilane, ledit procédé comprenant successivement :

- une étape (i) de formation d'une composition de copolyuréthanes à terminaisons - NCO par mise en œuvre d'une réaction de polyaddition entre :

  - un polyisocyanate (A) de formule (iA) :

$$OCN\text{-}R^1\text{-}NCO \qquad (iA)$$

  dans laquelle $R^1$ représente un radical divalent hydrocarboné comprenant de 5 à 45 atomes de carbone qui peut être aromatique ou aliphatique, linéaire, ramifié ou cyclique et peut inclure au moins un hétéroatome

choisi parmi O, S et N ;

- une composition (B) de polyols comprenant :

  - au moins un polyol (B1) de masse moléculaire moyenne en nombre Mn supérieure ou égale à 2500 g/mole ; et
  - au moins un polyol (B2) de masse moléculaire moyenne en nombre Mn inférieure à 2500 g/mole ; et

- un diol carboxylique (C) de formule (iC) :

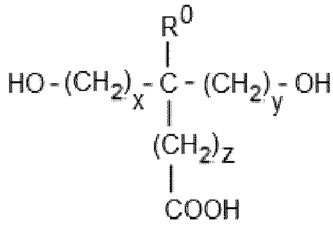

(iC)

dans laquelle :

  - $R^0$ représente un atome d'hydrogène ou un radical alkyle comprenant de 1 à 18 atomes de carbone ;
  - x et y, identiques ou différents, sont des nombres entiers allant de 1 à 8 ; et
  - z est un nombre entier allant de 0 à 8 ; puis

- une étape (ii) de réaction de la composition de copolyuréthanes formée à l'étape (i) avec une amine (D) de formule (iiD) :

N(R)(R')(R")   (iiD)

dans laquelle :

- R, R' et R", identiques ou différents, représentent chacun un radical hydrocarboné saturé, insaturé ou aromatique, comprenant éventuellement un hétéroatome choisi parmi N, O et S ;
- R, R' et R" étant en outre tels que ladite amine tertiaire (D) est une amine ou polyamine linéaire, ramifiée ou cyclique dont la masse molaire moyenne en nombre Mn va de 59 à 6000 g/mol et qui présente un pKa supérieur à 8 ; puis

- une étape (iii) de réaction de la composition de copolyuréthanes à groupe terminaux -NCO formée à l'étape (ii) avec un aminosilane (E) dérivé d'une amine secondaire, de formule (iiiE) :

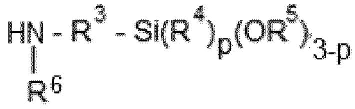

(iiiE)

dans laquelle :

- $R^3$ représente un radical divalent alkylène linéaire ou ramifié comprenant de 1 à 6 atomes de carbone ;
- $R^4$ représente un radical alkyl linéaire ou ramifié comprenant de 1 à 4 atomes de carbone ;
- $R^5$ représente un radical alkyl linéaire ou ramifié comprenant de 1 à 4 atomes de carbone, un radical alkylcarbonyl comprenant de 2 à 8 atomes de carbone, ou un radical dialkylimino comprenant de 3 à 8 atomes de carbone ; et
- p est un nombre entier égal à 0, 1 ou 2 ;
- $R^6$ représente un radical phényle, un radical alkyle linéaire, ramifié ou cyclique comprenant de 1 à 6

atomes de carbone, ou un radical choisi parmi les radicaux :

- de formule (IIc) :

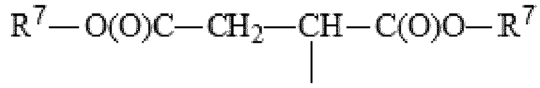

(IIc)

- de formule (IId) :

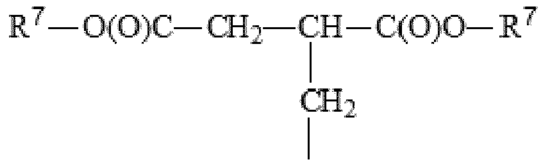

(IId) ;

- de formule :

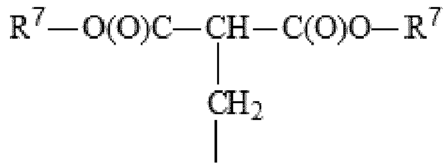

(IIe)

dans lesquelles $R^7$ est un radical alkyle linéaire ou ramifié comprenant de 1 à 6 atomes de carbone ;

- de formule (IIf) :

$-CH_2-COO^-$, $HN^+(R)(R')(R'')$ (IIf) ;

et
- de formule (IIg) :

$-CH_2-CH_2-COO^-$, $HN^+(R)(R')(R'')$ (IIg)

dans lesquelles R, R' et R" sont tels que définis ci-avant.

2. Procédé de préparation selon la revendication 1, **caractérisé en ce que** le radical $R^1$ du polyisocyanate (A) mis en œuvre dans l'étape (i) est choisi parmi :

- a) le radical divalent dérivé de l'isophorone diisocyanate (IPDI) :

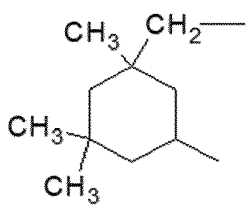

- b) le radical divalent dérivé des 4,4'- et 2,4'-dicyclohexylméthane diisocyanate (HMDI) :

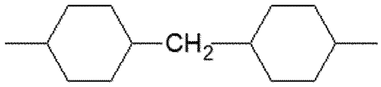

ou

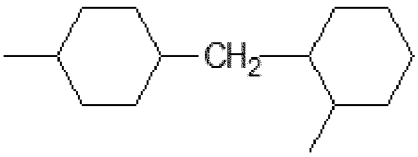

- c) le radical dérivé des 2,4- et 2,6-toluène diisocyanate (TDI)

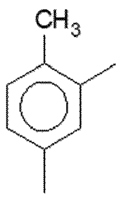

ou

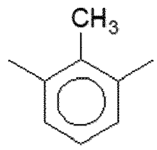

- d) le radical dérivé des 4,4'- et 2,4'-diphénylméthane diisocyanate (MDI)

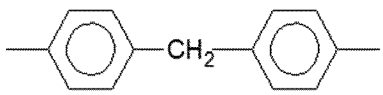

ou

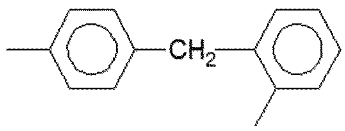

- e) le radical dérivé du m-xylylène diisocyanate (m-XDI)

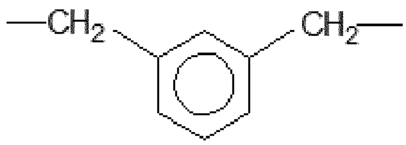

- f) le radical dérivé de l'hexamethylène diisocyanate (HDI)

-(CH2)6-

- g) le groupe divalent dérivé d'un allophanate d'hexaméthylène diisocyanate (HDI) de formule (iA') :

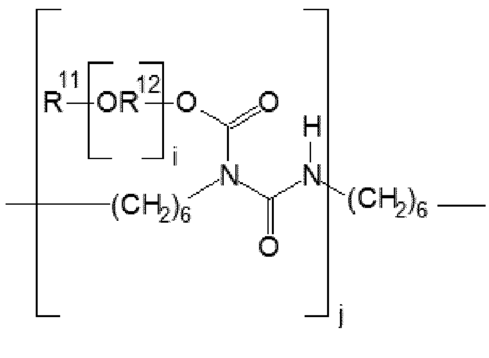

(iA')

dans laquelle :

- i est un nombre entier allant de 2 à 5 ;
- j est un nombre entier allant de 1 à 2 ;
- $R^{11}$ représente un radical hydrocarboné, saturé ou insaturé, cyclique ou acyclique, linéaire ou ramifié, comprenant de 6 à 14 atomes de carbone ;
- $R^{12}$ représente un groupe divalent propylène ;
- i, j, $R^{11}$ et $R^{12}$ étant tels que l'allophanate d'hexaméthylène diisocyanate correspondant à la formule (iA') comprend une teneur en groupe isocyanate NCO allant de 12 à 14% en poids par rapport au poids dudit allophanate.

**3.** Procédé de préparation selon l'une des revendications 1 ou 2, **caractérisé en ce que** la masse moléculaire moyenne en nombre Mn du polyol (B1) compris dans la composition (B) mise en œuvre dans l'étape (i) est comprise dans un domaine allant de 2500 g/mole à 20000 g/mole et/ou la masse moléculaire moyenne en nombre Mn du polyol (B2) compris dans la composition (B) mise en œuvre dans l'étape (i) est comprise dans un domaine allant de 200 à 2250 g/mole.

**4.** Procédé de préparation selon l'une des revendications 1 à 3, **caractérisé en ce que** la composition (B) de polyols est constituée de 10 à 35 % en mole du polyol (B1) et de de 65 % à 90 % en mole du polyol (B2), lesdits pourcentages en mole étant exprimés sur la base du nombre total de moles de (B1) et (B2) présentes dans la composition (B).

**5.** Procédé de préparation selon l'une des revendications 1 à 4, **caractérisé en ce que** la composition (B) de polyols comprend outre le polyol (B1), deux polyols (B2) choisis, respectivement, parmi :

- un premier polyol (B2-1) de masse moléculaire moyenne en nombre Mn supérieure ou égale à 1250 g/mole et inférieure à 2500 g/mole, de préférence comprise entre 1250 g/mole et 2250 g/mole, et
- un second polyol (B2-2) de masse moléculaire moyenne en nombre Mn allant de 200 g/mole à 1000 g/mole.

**6.** Procédé de préparation selon l'une des revendications 1 à 5, **caractérisé en ce que** les polyols compris dans la composition (B) ont une fonctionnalité hydroxyle égale à 2.

**7.** Procédé de préparation selon l'une des revendications 1 à 6, **caractérisé en ce que** les polyols compris dans la composition (B) sont des polyéther diols, de préférence des polyoxypropylène diols.

**8.** Procédé de préparation selon l'une des revendications 1 à 7, **caractérisé en ce que** le diol carboxylique (C) mis en œuvre dans l'étape (i) a pour formule (iC) dans laquelle :

- $R^0$ représente un radical alkyle comprenant de 1 à 4 atomes de carbone, de préférence un radical méthyle, éthyle ou n-propyle, encore plus préférentiellement un radical méthyle ;
- x et y sont identiques et égaux à 1 ; et/ou
- z est égal à 0.

**9.** Procédé de préparation selon l'une des revendications 1 à 8, **caractérisé en ce que** l'amine tertiaire (D) mise en œuvre dans l'étape (ii) est choisie parmi :

- une polyéthylèneimine,
- une polypropylèneimine,
- la triéthylamine,
- le 1,8-diazabicyclo(5.4.0)undec-7-ene (ou DBU) de formule développée :

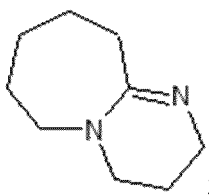

;

- le 1,4-diazabicyclo[2.2.2]octane (ou DABCO), de formule développée:

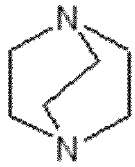

;

- le 1,5-diazabicyclo[4.3.0]non-5-ène (DBN), de formule développée :

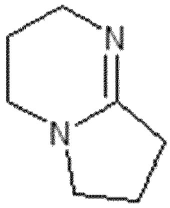

;

- la N,N-dicyclohexylmethylamine (ou DCHMA) ; et
- la trihexylamine (ou THA).

**10.** Procédé de préparation selon l'une des revendications 1 à 9, **caractérisé en ce que** l'aminosilane (E) mis en œuvre dans l'étape (iii) a pour formule (iiiE) dans laquelle :

- $R^3$ représente le radical méthylène ou n-propylène ;
- $R^4$ et $R^5$, identiques ou différents, représentent chacun le radical méthyle ou éthyle ;
- p égale 0 ; et/ou
- $R^6$ représente un radical alkyle linéaire comprenant de 1 à 4 atomes de carbone, ou un radical de formule (IIc) dans laquelle $R^7$ est un radical alkyle comprenant de 1 à 3 atomes de carbone.

**11.** Procédé de préparation selon l'une des revendications 1 à 10, **caractérisé en ce qu'**il est mis en œuvre en présence d'un agent plastifiant et/ou d'un solvant n'étant pas de l'eau qui est, préférentiellement, introduit à l'étape (i).

**12.** Composition de copolyuréthanes silylés ioniques comprenant 2 groupes terminaux uréido-alkylène-alkoxysilane, ladite composition étant susceptible d'être obtenue par le procédé de préparation tel que défini dans l'une des revendications 1 à 11.

**13.** Composition réticulable d'adhésif et/ou mastic comprenant :

- au moins une composition de copolyuréthanes silylés ioniques à groupes terminaux uréido-alkylène-alkoxysilane telle que définie dans la revendication 12, et
- au moins une charge.

**14.** Article comprenant la composition réticulable adhésive et/ou de mastic telle que définie dans la revendication 13 dans un conditionnement hermétique, à l'abri de l'air.

**15.** Procédé d'assemblage de 2 substrats comprenant :

- l'enduction de la composition réticulable d'adhésif et/ou de mastic telle que définie dans la revendication 13, à température ambiante, sous la forme d'une couche d'épaisseur comprise entre 0,2 et 5 mm, sur au moins l'un des 2 substrats à assembler ; puis
- la mise en contact effective des 2 substrats.

Europäisches Patentamt
European Patent Office
Office européen des brevets

# RAPPORT DE RECHERCHE EUROPEENNE

Numéro de la demande
EP 22 20 4631

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2004/132864 A1 (SHIBAHARA SYUNSUKE [JP] ET AL) 8 juillet 2004 (2004-07-08)<br>* page 15, par. 0158-0160;<br>pages 1;3-5;13, alinéas 3-11;44,52-53;141 - pages 23-24;27, alinéa 238-262; 0272-0279; exemple 8; tableau 2 *<br>----- | 1-15 | INV.<br>C08G18/12<br>C08G18/20<br>C08G18/22<br>C08G18/28<br>C08G18/34<br>C08G18/48<br>C08G18/66<br>C08G18/75<br>C08G18/83<br>C08L75/08<br>C09J5/00<br>C09J175/08<br>C09K3/10 |
| A | US 2017/088758 A1 (BZOWEJ EUGENE [US] ET AL) 30 mars 2017 (2017-03-30)<br>* pages 21-22; exemples 2-3 *<br>----- | 1-15 | |
| | | | **DOMAINES TECHNIQUES RECHERCHES (IPC)** |
| | | | G02F<br>C08J<br>C08G<br>C08L<br>C09J<br>C09K |

Le présent rapport a été établi pour toutes les revendications

| Lieu de la recherche | Date d'achèvement de la recherche | Examinateur |
|---|---|---|
| Munich | 18 janvier 2023 | Stefaniu, Cristina |

1

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................................................
& : membre de la même famille, document correspondant

EPO FORM 1503 03.82 (P04C02)

## ANNEXE AU RAPPORT DE RECHERCHE EUROPEENNE RELATIF A LA DEMANDE DE BREVET EUROPEEN NO.

EP 22 20 4631

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-01-2023

| Document brevet cité au rapport de recherche | Date de publication | Membre(s) de la famille de brevet(s) | Date de publication |
|---|---|---|---|
| US 2004132864 A1 | 08-07-2004 | CN 1524116 A | 25-08-2004 |
| | | EP 1431366 A1 | 23-06-2004 |
| | | HK 1067140 A1 | 01-04-2005 |
| | | JP 3350532 B1 | 25-11-2002 |
| | | JP 2003105307 A | 09-04-2003 |
| | | KR 20040047863 A | 05-06-2004 |
| | | TW I276673 B | 21-03-2007 |
| | | US 2004132864 A1 | 08-07-2004 |
| | | US 2008119607 A1 | 22-05-2008 |
| | | WO 03029380 A1 | 10-04-2003 |
| US 2017088758 A1 | 30-03-2017 | CN 108138023 A | 08-06-2018 |
| | | CN 113004854 A | 22-06-2021 |
| | | EP 3356445 A1 | 08-08-2018 |
| | | JP 6704043 B2 | 03-06-2020 |
| | | JP 2019194717 A | 07-11-2019 |
| | | JP 2019500433 A | 10-01-2019 |
| | | KR 20180045032 A | 03-05-2018 |
| | | TW 201718811 A | 01-06-2017 |
| | | TW 201831637 A | 01-09-2018 |
| | | US 2017088758 A1 | 30-03-2017 |
| | | US 2019106609 A1 | 11-04-2019 |
| | | US 2020248054 A1 | 06-08-2020 |
| | | WO 2017059011 A1 | 06-04-2017 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2021079063 A
- US 3412054 A
- US 9567354 B
- FR 1591172


### Littérature non-brevet citée dans la description


- **ROBERT M. EVANS.** *Polyurethane Sealants,* ISBN 087762-998-6